# FASCICULE DE BREVET EUROPEEN

(11) **EP 2 088 010 B1**
(45) Date de publication et mention de la délivrance du brevet: **20.07.2011**
(21) Numéro de dépôt: 09290081.0
(22) Date de dépôt: 04.02.2009
(51) Int. Cl.: B60G 17/005

(54) **Dispositif assurant le relevage des roues d'un engin**
Vorrichtung, die eine Hebung der Räder einer Maschine sicherstellt
Device for raising the wheels of a vehicle

(30) Priorité: 05.02.2008 FR 0800598
(43) Date de publication de la demande: 12.08.2009
(73) Titulaire: NEXTER Systems, 42328 Roanne Cedex (FR)
(72) Inventeur: Balbo, Patrick, 18023 Bourges Cedex (FR)
(74) Mandataire: Célanie, Christian

(56) Documents cités:
- WO-A-99/42311
- FR-A- 2 857 301
- FR-A- 2 865 532
- GB-A- 2 250 964

## Description

Le secteur technique de la présente invention est celui des dispositifs de relevage des roues d'un véhicule afin d'assurer sa stabilité par rapport au sol.

Lorsqu'on souhaite isoler du sol les roues d'un véhicule militaire ou civil, d'une remorque ou d'une artillerie tractée on met en oeuvre des moyens de relevage qui assurent avec plus ou moins de facilités ces opérations. Ces moyens sont toujours indépendants des moyens amortisseurs. Dans le cas d'une artillerie tractée, on doit mettre en oeuvre une plate-forme que l'on doit abaisser afin de l'appliquer au sol ce qui provoque le relevage. Pour réaliser ces opérations, on dispose toujours de deux moyens distincts dont il faut prévoir les liaisons avec le châssis et la suspension du véhicule. WO 99/42311 presente un systeme de suspension pliable.

Le but de la présente invention est de fournir un dispositif intégré dans une suspension pour assurer à la fois la fonction relevage et la fonction suspension pure en vue de simplifier la réalisation de cette suspension.

L'invention a donc pour objet un dispositif assurant le Dispositif assurant le relevage des roues d'un engin muni de roues, caractérisé en ce qu'il est constitué d'au moins un vérin dont la tige est actionnée d'au moins un côté pour le relevage desdites roues et qui est par ailleurs est soumise à l'action d'un moyen amortisseur, ledit vérin étant fixé par ses points d'attache entre la suspension et le châssis dudit engin.

Selon une caractéristique de l'invention, la tige est actionnée par un moyen hydraulique ou pneumatique pour le relevage desdites roues.

Selon une autre caractéristique de l'invention, le moyen hydraulique ou pneumatique est constitué par au moins une chambre alimentée en fluide pour rapprocher les points d'attache dudit vérin.

Selon encore une autre caractéristique de l'invention, le vérin comporte deux chambres pouvant être alimentées en fluide pour rapprocher ou éloigner les points d'attache dudit vérin par rapport à une position intermédiaire moyenne.

Selon encore une autre caractéristique de l'invention, le corps du vérin est fixé à un point d'attache par l'intermédiaire d'un montage vis/écrou pour le relevage desdites roues.

Selon encore une autre caractéristique de l'invention, le montage vis/écrou est constitué d'une vis sans fin fixée à un point d'attache et d'un écrou fixé au corps du vérin.

Selon encore une autre caractéristique de l'invention, l'écrou est relié à un réducteur dont la sortie est reliée à une manivelle ou à un moyen moteur.

Selon encore une autre caractéristique de l'invention, le moyen amortisseur comprend au moins un ressort.

Selon encore une autre caractéristique de l'invention, la suspension de l'engin est constituée par une double triangulation, le vérin étant interposé entre le châssis et un des triangles.

Selon encore une autre caractéristique de l'invention, la suspension de l'engin est constituée d'un système à bras tiré, le vérin étant interposé entre le bras tiré et le châssis.

Selon encore une autre caractéristique de l'invention, l'engin est un véhicule, en particulier un véhicule militaire.

Selon encore une autre caractéristique de l'invention, l'engin est une artillerie tractée.

Selon encore une autre caractéristique de l'invention, l'engin est un véhicule, en particulier une remorque.

Un tout premier avantage du dispositif selon l'invention réside dans la compacité de la suspension sans modification des points d'ancrage.

Un autre avantage réside dans l'absence de modification du châssis.

Un autre avantage réside tout particulièrement dans l'application à une artillerie tractée où on utilise les points de fixation actuels de la suspension tout en assurant une meilleure stabilité.

D'autres caractéristiques, détails et avantages de l'invention ressortiront plus clairement de la description donnée ci-après à titre indicatif en relation avec des dessins dans lesquels :
- la figure 1 représente une coupe du vérin selon un premier mode de réalisation dans sa position d'amortisseur,
- la figure 2 représente une coupe du vérin de la figure 1 dans sa position relevage,
- la figure 3 représente une coupe du vérin selon un autre mode de réalisation
- la figure 4 est une vue montrant l'intégration du vérin dans une suspension à double triangulation en position d'amortisseur,
- la figure 5 est une vue montrant cette même suspension en position de relevage,
- la figure 6 est une vue montrant l'intégration du vérin dans une suspension à bras tiré,
- la figure 7 représente trois positions possibles du vérin dans la suspension à bras tiré, et
- la figure 8 représente une coupe d'un autre mode de réalisation du vérin.

Dans la description particulière qui va suivre on va décrire l'application à une artillerie tractée, c'est-à-dire un canon monté sur une remorque à roues dont l'essieu est relié au châssis lui-même relié une plate-forme et à deux flèches attelées au véhicule tracteur. Lorsqu'on souhaite mettre cette artillerie en batterie, il faut stabiliser l'arme en abaissant la plate-forme et déployer les flèches dont les extrémités portent des bêches d'ancrage au sol. Cette artillerie est bien connue de l'homme du métier et il n'est pas nécessaire d'en faire une description plus détaillée.

Cependant, il va de soi que le dispositif selon l'invention s'applique à n'importe quel engin à roues dont on désire à la fois assurer la fonction amortisseur lors du roulage et la fonction relevage par un moyen unique. Il s'applique par exemple à une remorque qu'il faut poser sur une plate-forme fixe en escamotant les roues.

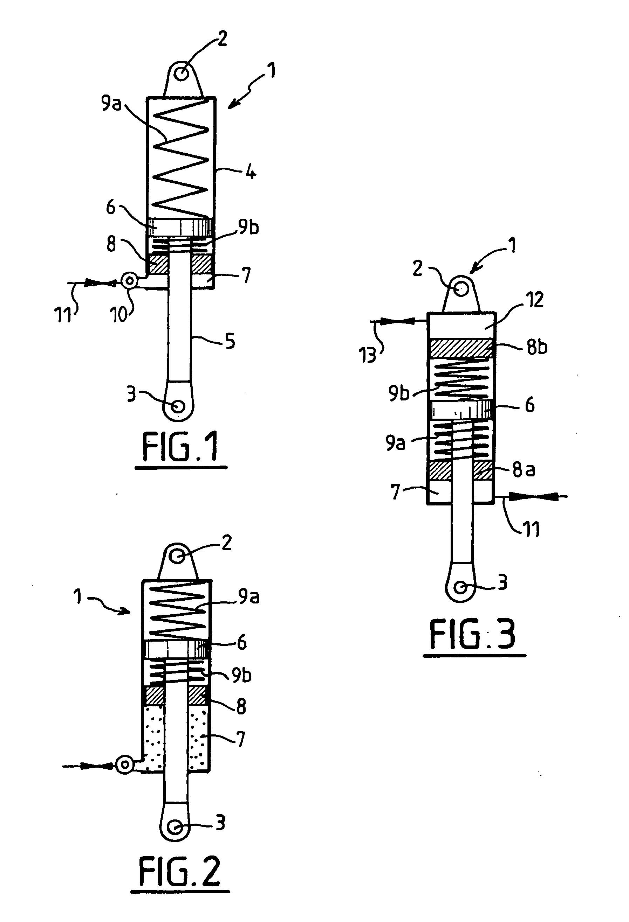

Sur la figure 1, on a représenté schématiquement en coupe un vérin monobloc 1 muni de ses points d'attache 2 et 3 à un engin à roues (non représenté). Ce vérin comprend classiquement un corps 4 et une tige 5 solidaire d'un piston 6. Selon l'invention, le vérin 1 comprend une chambre interne 7 dont l'étanchéité est assurée par un piston libre 8 qui porte des joints d'étanchéité. Cette chambre 7 est disposée d'un côté du piston 6 de façon à réduire par sa pressurisation la distance entre les points d'attache 2 et 3. Sur la figure, on voit que les deux points d'attache sont disposés en éloignement maximum. Le corps 4 du piston renferme un ressort 9a disposé entre le corps 4 et le piston 6 donc du côté opposé à celui de la chambre 7. Un autre ressort 9b est disposé entre le piston 6 et le piston libre 8. Il permet de repousser le piston libre lors des phases de roulage. Dans la position représentée, le ressort 9 est en extension maximale, mais il va sans dire qu'en phase de roulage de l'engin, ce ressort joue librement son rôle d'amortisseur en étant soumis à une compression plus ou moins importante par le piston 6 faisant varier sa longueur.

La chambre 7 est alimentée en fluide, de l'air ou de l'huile par exemple, à l'aide d'un raccord 10 permanent ou temporaire permettant la liaison avec une source (non représentée) par l'intermédiaire de la canalisation 11. Comme représenté sur la figure, cette canalisation est à double sens pour alimenter ou vider la chambre. Dans cette configuration du vérin 1, la chambre 7 est fermée et le vérin est en position d'amortissement. Le ressort 9b assure le rappel de la tige 5 et les volumes d'air (ou d'un autre gaz) entourant les ressorts 9a et 9b assurent l'amortissement des mouvements de la tige. Cette configuration est celle adoptée en mode roulage d'un véhicule.

Sur la figure 2, on a représenté le vérin monobloc 1 dans la position relevage, c'est-à-dire la position dans laquelle on a injecté un fluide dans la chambre 7 afin de réduire la distance entre les deux points d'attache 2 et 3. Le piston 6 a donc été poussé par le fluide en translation et a provoqué la compression du ressort 9. Dans cette position, le vérin assure la fonction de relevage qui correspond à une configuration de stationnement du véhicule ou de la remorque ou une position de tir pour une artillerie.

On voit donc que le piston 1 selon l'invention permet d'assurer deux fonctions, une fonction amortisseur telle que représentée sur la figure 1 et une fonction relevage telle que représentée sur la figure 2.

Sur la figure 3, on a représenté un autre mode de réalisation du vérin 1 selon l'invention dans lequel on a prévu une seconde chambre interne 12 à l'opposé de la chambre 7. La chambre 12 est disposée en regard de la face libre du piston 6 et elle est reliée à une canalisation 13 permettant son alimentation en fluide liquide ou gazeux. Un premier piston libre 8a est interposé entre la chambre 7 et le piston 6 et un deuxième piston libre 8b est interposé entre la chambre 12 et le piston 6. Ces pistons libres portent des moyens d'étanchéité. Un ressort de compression 9a, 9b est disposé entre chaque piston libre 8a, 8b et le piston 6. L'adjonction de cette seconde chambre permet de définir trois positions du vérin 1. Une première position de roulage, dite médiane, lorsque aucune chambre n'est alimentée (et que les canalisations 11 et 13 sont fermées). Les ressorts 9a et 9b assurent la fonction de rappel du vérin (suspension) et les volumes d'air (ou d'un autre gaz) entourant les ressorts assurent l'amortissement des mouvements. Une seconde position, dite de confort de manoeuvre, lorsque la chambre 12 est alimentée et une troisième position, dite de relevage lorsque la chambre 7 est alimentée. Lorsque la chambre 12 est alimentée, on peut manoeuvrer l'artillerie manuellement de manière aisée en quittant le mode roulage comme cela sera expliqué ci-après.

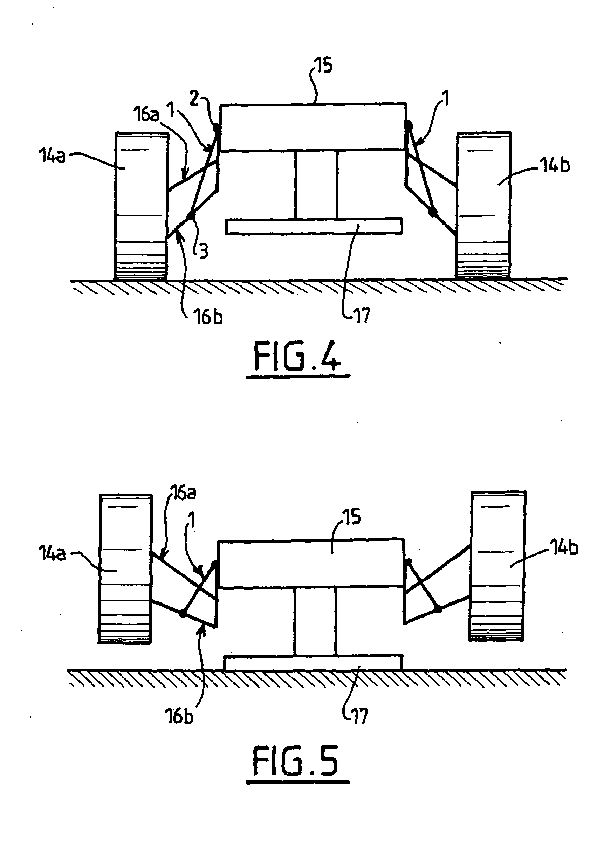

La figure 4 est une représentation schématique de la suspension d'une artillerie tractée donnée à titre d'exemple. On voit que les roues 14a et 14b sont reliées au châssis 15 de l'artillerie (non représentée) par l'intermédiaire d'une suspension à double triangulation 16a, 16b et reposent sur le sol. Sur la figure, on voit que le vérin 1 est relié au triangle inférieur 1b. Une plate-forme 17 est fixée rigidement au châssis 15 et cette plate-forme est destinée à venir en contact avec le sol lorsqu'on veut stabiliser l'artillerie. Sur la figure, le vérin 1 est en extension maximale comme représenté sur la figure 1 et le ressort 9 joue librement son rôle d'amortisseur lorsque l'artillerie est tractée sur route par un véhicule en phase de roulage.

Sur la figure 5, on a représenté l'artillerie en position relevage. On voit que l'alimentation en fluide du vérin 1 a amené ce vérin 1 dans la position représentée sur la figure 2. Le relevage des roues 14a et 14b qui intervient amène naturellement la plate-forme 17 en contact avec le sol. L'artillerie repose alors de façon stable sur la plate-forme 17 et sur les flèches évoquées précédemment.

Avec ce type de suspension à double triangulation, aucune modification du châssis n'est à prévoir puisque le vérin selon l'invention reprend les points de fixation des amortisseurs prévus par le constructeur. On obtient ainsi une meilleure stabilisation et une meilleure répartition des masses. Enfin, l'ouverture des flèches présentes dans ce type d'artillerie tractée est facilitée. Cette réalisation confère donc des avantages importants.

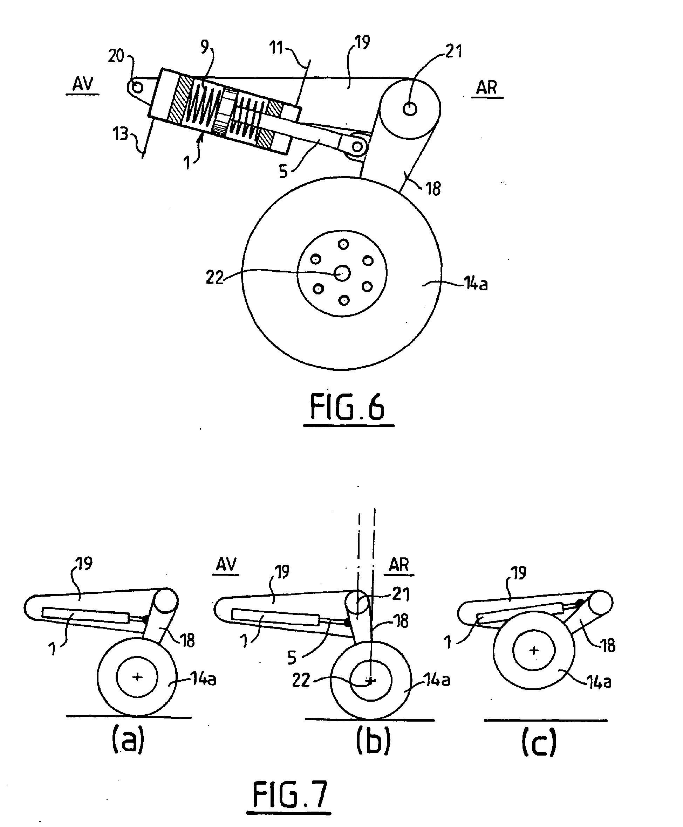

Sur la figure 6, on a représenté une autre suspension dite à bras tiré. Autrement dit, chaque roue, 14a par exemple, est solidaire d'un bras de suspension 18 monté à l'aide d'une articulation 21 par rapport à une plaque d'interface 19 avec le châssis (non représenté). Le vérin 1 ici représenté est celui décrit en relation avec la figure 3 et est alimenté en fluide par les canalisations 11 et 13, ce qui permet d'assurer les trois positions de ce vérin représentées sur la figure 7. Sur la figure 6, on voit que le vérin 1 est commandé de manière à placer l'axe de rotation 22 de la roue 14a en avant de l'articulation 21.

Là encore avec ce type de suspension, on obtient les mêmes avantages qu'avec la suspension à double triangulation avec toutefois une complexité plus grande du dispositif de relevage.

La figure 7(a) montre la première position de roulage dite médiane dans laquelle la roue 14a est en contact avec le sol. Dans cette configuration, le ressort 9 assure alors son rôle d'amortisseur comme cela a été décrit précédemment.

La figure 7(b) montre la seconde position dans laquelle la chambre 12 a été alimentée en provoquant l'extension de la tige 5 du vérin 1. Ceci a pour effet d'amener l'axe 22 de la roue 14a en arrière de l'articulation 21. Cette seconde position permet de déplacer les roues par rapport au centre de gravité de l'artillerie. L'axe des roues se trouve alors sensiblement à la verticale du centre de gravité. Cette disposition permet de faciliter les manoeuvres manuelles de l'artillerie lorsqu'on l'a séparée de son véhicule tracteur et qu'il s'agit de positionner l'artillerie en fonction des ordres de tir.

Sur la figure 7(c), on a représenté la troisième position de la roue 14a qui a été escamotée. La chambre 7 du vérin a été alimentée par la canalisation 11 et provoque le rapprochement des points d'attache du vérin. L'artillerie repose alors sur le sol par l'intermédiaire de la plate-forme 17 (non représentée ici).

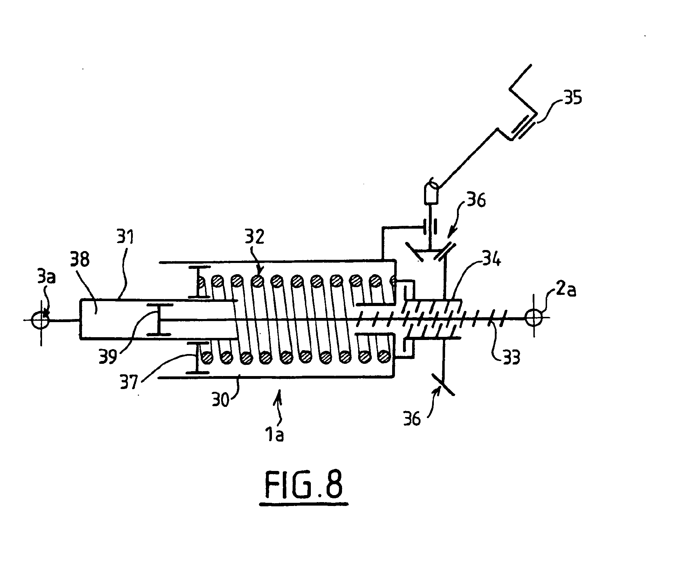

Sur la figure 8, on a représenté une variante de réalisation du vérin dans laquelle les variations de distance des points d'attache 2a et 3a sont commandées par une vis sans fin. Dans cette réalisation, on commande le rapprochement des points d'attache 3a, 2a par l'intermédiaire d'un montage vis/écrou. A cette fin, le vérin la comprend un corps 30 renfermant un ressort 32 en appui sur un disque 37 solidaire d'une tige 31. Dans ce mode de réalisation, la tige 31 délimite une chambre 38 à l'intérieur de laquelle coulisse une tige portant un piston 39. Le disque 37 coulisse dans le corps 30 contre l'action d'un ressort 32. Ce dernier ressort 32 est le ressort de rappel de la suspension. Le piston 39 et la chambre 38 jouent ici le rôle d'amortisseur des oscillations du ressort 32. La tige portant le piston 39 est fixe et solidaire du corps 30. En phase de roulage, le ressort 32 et l'ensemble piston 39/chambre 38 jouent le rôle d'amortisseur comme expliqué précédemment. Le corps 30 du vérin est relié au véhicule par un montage vis/écrou qui comprend une vis sans fin 33 en prise avec un écrou 34 fixé à la base de ce corps. Ainsi, en actionnant l'écrou 34, on fait varier la distance entre les points d'attache 2a et 3a. Pour actionner l'écrou 34, on prévoit un réducteur 36 dont la sortie est reliée à une manivelle 35 ou bien à l'axe d'un moteur.

Bien que la présente description des modes de réalisation soit faite en relation avec une artillerie tractée, on comprend que le dispositif selon l'invention peut être appliqué à tout engin muni de roue sans modification.

## Revendications

1. Dispositif assurant le relevage des roues d'un engin muni de roues (14), comprenant au moins un vérin (1) dont la tige (5) est actionnée d'au moins un côté pour le relevage desdites roues (14) et qui est par ailleurs soumise à l'action d'un moyen amortisseur (9), ledit vérin étant fixé par ses points d'attache (2,3) entre une suspension et le châssis dudit engin, la tige (5) étant actionnée par un moyen hydraulique ou pneumatique pour le relevage desdites roues (14), **caractérisé en ce que** la suspension est du type à bras tiré et chaque roue (14) est reliée à un bras de suspension (18) monté à l'aide d'une articulation (21) sur le châssis, le vérin comportant des première et deuxième chambres (7, 12) pouvant être alimentées en fluide pour rapprocher ou éloigner les points d'attache (2, 3) du vérin par rapport à une position intermédiaire moyenne de manière à avoir au moins trois positions : une première position de roulage dans laquelle un axe de rotation de la roue (14) est positionné en avant de l'articulation (21), une deuxième position de manoeuvre dans laquelle la première chambre (7) du vérin est alimentée pour amener l'axe de rotation de la roue (14) en arrière de l'articulation (21) et une troisième position de relevage de la roue (14) dans laquelle la deuxième chambre (12) du vérin est alimentée pour provoquer le rapprochement des points d'attache.

2. Dispositif assurant le relevage des roues d'un engin selon la revendication 1, **caractérisé en ce que** le moyen hydraulique ou pneumatique pour le relevage desdites roues (14) comprend des canalisations (11, 13) d'alimentation en fluide reliées aux première et deuxième chambres (7, 12).

3. Dispositif assurant le relevage des roues d'un engin selon la revendication 2, **caractérisé en ce que** les première et deuxième chambres (7, 12) ne sont pas alimentées en fluide dans la position de roulage, les canalisations (11, 13) d'alimentation en fluide étant fermées.

4. Dispositif assurant le relevage des roues d'un engin selon l'une des revendications 1 à 3, **caractérisé en ce que** le vérin comprend un premier piston (6) relié à la tige (5) et des deuxième et troisième pistons (8a, 8b) formant les première et deuxième chambres (7, 12).

5. Dispositif assurant le relevage des roues d'un engin selon l'une des revendications 1 à 4, **caractérisé en ce que** la deuxième chambre (12) est disposée en regard d'une face libre du premier piston (6), les première et deuxième chambres (7, 12) étant disposées à l'opposé l'une de l'autre dans le vérin (1).

6. Dispositif assurant le relevage des roues d'un engin selon l'une des revendications 1 à 5, **caractérisé en ce qu'**un corps (30) du vérin (1a) est fixé à un écrou (34) d'un montage vis/écrou (33, 34) comprenant d'autre part une vis sans fin (33) fixée à un des points d'attache (2a) permettant le relevage desdites roues.

7. Dispositif assurant le relevage des roues d'un engin selon la revendication 6, **caractérisé en ce que** l'écrou (34) est relié à un réducteur (36) dont la sortie est reliée à une manivelle (35) ou à un moyen moteur.

8. Dispositif assurant le relevage des roues d'un engin selon l'une quelconque des revendications précédentes, **caractérisé en ce que** le moyen amortisseur comprend au moins un ressort (9, 9a, 9b, 32).

9. Dispositif assurant le relevage des roues d'un engin selon l'une des revendications 1 à 8, **caractérisé en ce que** l'engin est un véhicule, en particulier un véhicule militaire.

10. Dispositif assurant le relevage des roues d'un engin selon l'une des revendications 1 à 8, **caractérisé en ce que** l'engin est une artillerie tractée.

11. Dispositif assurant le relevage des roues d'un engin selon l'une des revendications 1 à 8, **caractérisé en ce que** l'engin est un véhicule, en particulier une remorque.

## Claims

1. Device to raise the wheels of a wheeled piece of equipment (14), comprising at least one jack (1) whose rod (5) is activated on at least one side to raise said wheels (14) and which is furthermore subjected to the action of shock-absorbing means (9), said jack being fastened by its points of attachment (2, 3) between a suspension and the chassis of said piece of equipment, the rod (5) being activated by hydraulic or pneumatic means to raise said wheels (14), **characterized in that** the suspension is a trailing arm suspension wherein each wheel (14) is linked to a suspension arm (18) mounted by means of a joint (21) onto the chassis, the jack incorporating first and second chambers (7, 12) able to be supplied with fluid to bring the points of attachment (2, 3) of the jack closer or further away with respect to a mean intermediate position so as to have at least three positions: a first rolling position in which a an axis of rotation of the wheel (14) is located to the fore of the joint (21), a second maneuvering position in which the first chamber (7) of the jack is supplied to bring the axis of rotation of the wheel (14) to the rear of the joint (21) and a third position to raise the wheel (14) in which the second chamber (12) of the jack is supplied to cause the points of attachment to come closer together.

2. A device to raise the wheels of a piece of equipment according to Claim 1, **characterized in that** the hydraulic or pneumatic means to raise said wheels (14) comprise fluid supply ducts (11, 13) linked to the first and second chambers (7, 12).

3. A device to raise the wheels of a piece of equipment according to Claim 2, **characterized in that** the first and second chambers (7, 12) are not supplied with fluid during the rolling positions, the fluid supply ducts (11, 13) being closed.

4. A device to raise the wheels of a piece of equipment according to one of Claims 1 to 3, **characterized in that** the jack comprises a first piston (6) linked to the rod (5) and second and third pistons (8a, 8b) forming the first and second chambers (7, 12).

5. A device to raise the wheels of a piece of equipment according to one of Claims 1 to 4, **characterized in that** the second chamber (12) is positioned opposite a free face of the first piston (6), the first and second chambers (7, 12) being arranged opposing one another in the jack (1).

6. A device to raise the wheels of a piece of equipment according to one of Claims 1 to 5, **characterized in that** a body (3) of the jack (1a) is fixed to a nut (34) of a screw/nut (33, 34) assembly further comprising a worm screw (33) fixed to one of the points of attachment (2a) enabling the raising of said wheels.

7. A device to raise the wheels of a piece of equipment according to Claim 6, **characterized in that** the nut (34) is linked to reduction gear (36) whose output is linked to a crank (35) or to motor means.

8. A device to raise the wheels of a piece of equipment according to any one of the above Claims, **characterized in that** the shock-absorbing means comprise at least one spring (9, 9a, 9b, 32).

9. A device to raise the wheels of a piece of equipment according to one of Claims 1 to 8, **characterized in that** the piece of equipment is a vehicle, in particular a military vehicle.

10. A device to raise the wheels of a piece of equipment according to one of Claims 1 to 8, **characterized in that** the equipment is a towed piece of artillery.

11. A device to raise the wheels of a piece of equipment according to one of Claims 1 to 8, **characterized in that** the equipment is a vehicle, and more particularly a trailer.

## Patentansprüche

1. Vorrichtung zur Gewährleistung der Anhebung der Räder einer mit Rädern (14) versehenen Maschine, mit wenigstens einem Zylinder (1), dessen Stange (5) von wenigstens einer Seite zum Anheben der genannten Räder (14) betätigt wird, und der außerdem der Wirkung eines Dämpfungsmittels (9) unterworfen ist, wobei der genannte Zylinder durch seine Befestigungspunkte (2, 3) zwischen einer Aufhängung und dem Fahrwerk der genannten Maschine befestigt ist, wobei die Stange (5) durch ein hydraulisches oder pneumatisches Mittel zum Anheben der genannten Räder (14) betätigt wird, **dadurch gekennzeichnet, dass** die Aufhängung ein Längslenker ist und jedes Rad (14) mit einem Aufhängungsarm (18) verbunden ist, der mit Hilfe eines Gelenkes (21) am Fahrwerk montiert ist, wobei der Zylinder erste und zweite Kammern (7, 12) umfasst, die mit Fluid versorgt werden können, um die Befestigungspunkte (2, 3) des zylinders in Bezug auf eine mittlere Zwischenposition derartig anzunähern oder zu entfernen, um wenigstens drei Positionen aufzuweisen: eine erste Roll-Position, in der eine Drehachse des Rades (14) vor dem Gelenk (21) positioniert ist, einer zweiten Manövrier-Position, in der die erste Kammer (7) des Zylinders versorgt wird, um die Drehachse des Rades (14) hinter das Gelenk (21) zu führen, und eine dritte Position zur Anhebung des Rades (14), in der die zweite Kammer (12) des Zylinders versorgt wird, um die Annäherung der Befestigungspunkte zu bewirken.

2. Vorrichtung zur Gewährleistung der Anhebung der Räder einer Maschine nach Anspruch 1, **dadurch gekennzeichnet, dass** das hydraulische oder pneumatische Mittel zum Anheben der genannten Räder (14) Rohrleitungen (11, 13) zur Versorgung mit Fluid umfasst, die mit der ersten und zweiten Kammer (7, 12) verbunden sind.

3. Vorrichtung zur Gewährleistung der Anhebung der Räder einer Maschine nach Anspruch 2, **dadurch gekennzeichnet, dass** die erste und zweite Kammer (7, 12) in der Roll-Position nicht mit Fluid versorgt sind, wobei die Rohrleitungen (11, 13) zur Versorgung mit Fluid geschlossen sind.

4. Vorrichtung zur Gewährleistung der Anhebung der Räder einer Maschine nach einem der Ansprüche 1 bis 3, **dadurch gekennzeichnet, dass** der Zylinder einen ersten Kolben (6), der mit der Stange (5) verbunden ist, und zweite und dritte Kolben (8a, 8b) umfasst, welche die erste und zweite Kammer (7, 12) bilden.

5. Vorrichtung zur Gewährleistung der Anhebung der Räder einer Maschine nach einem der Ansprüche 1 bis 4, **dadurch gekennzeichnet, dass** die zweite Kammer (12) angrenzend an eine freie fläche des ersten Kolbens (6) angeordnet ist, wobei die erste und zweite Kammer (7, 12) einander gegenüberliegend im Zylinder (1) angeordnet sind.

6. Vorrichtung zur Gewährleistung der Anhebung der Räder einer Maschine nach einem der Ansprüche 1 bis 5, **dadurch gekennzeichnet, dass** ein Körper (30) des Zylinders (1a) an einer Mutter (34) einer Schraube / Mutter - Halterung (33, 34) befestigt ist, die andererseits eine Endlosschraube (33) umfasst, die an einem der Befestigungspunkte (2a) befestigt ist, um das Anheben der genannten Räder zu ermöglichen.

7. Vorrichtung zur Gewährleistung der Anhebung der Räder einer Maschine nach Anspruch 6, **dadurch gekennzeichnet, dass** die Mutter (34) mit einem Getriebe (36) verbunden ist, dessen Ausgang mit einer Kurbel (35) oder einem Motormittel verbunden ist.

8. Vorrichtung zur Gewährleistung der Anhebung der Räder einer Maschine nach einem der vorhergehenden Ansprüche, **dadurch gekennzeichnet, dass** das Dämpfungsmittel wenigstens eine Feder (9, 9a, 9b, 32) umfaßt.

9. Vorrichtung zur Gewährleistung der Anhebung der Räder einer Maschine nach einem der Ansprüche 1 bis 8, **dadurch gekennzeichnet, dass** die Maschine ein Fahrzeug, insbesondere ein Militärfahrzeug, ist.

10. Vorrichtung zur Gewährleistung der Anhebung der Räder einer Maschine nach einem der Ansprüche 1 bis 8, **dadurch gekennzeichnet, dass** die Maschine ein gezogenes Geschütz ist.

11. Vorrichtung zur Gewährleistung der Anhebung der Räder einer Maschine nach einem der Ansprüche 1 bis 8, **dadurch gekennzeichnet, dass** die Maschine ein Fahrzeug, insbesondere ein Anhänger, ist.
